# EUROPÄISCHE PATENTSCHRIFT

(11) **EP 2 576 879 B1**
(45) Veröffentlichungstag und Bekanntmachung des Hinweises auf die Patenterteilung: **02.08.2017**
(21) Anmeldenummer: 11718893.8
(22) Anmeldetag: 24.02.2011
(51) Int. Cl.: D03D 15/08, A01G 9/22, D04B 21/18, E06B 9/24

(54) **BESCHATTUNGSSYSTEM**
SHADING SYSTEM
SYSTÈME D'OCCULTATION

(30) Priorität: 31.05.2010 DE 102010022059
(43) Veröffentlichungstag der Anmeldung: 10.04.2013
(73) Patentinhaber: Penn Textile Solutions GmbH, 33102 Paderborn (DE)
(72) Erfinder: REGENSTEIN, Klaus-Joachim, 63654 Büdingen (DE)
(74) Vertreter: Angerhausen, Christoph
(86) Internationale Anmeldenummer: PCT/DE2011/000184
(87) Internationale Veröffentlichungsnummer: WO 2011/150902

(56) Entgegenhaltungen:
- EP-A1- 1 342 824
- EP-A2- 1 420 624
- DE-A1- 3 035 232

## Beschreibung

Die vorliegende Erfindung betrifft die Verwendung eines Beschattungsgewebes oder Beschattungsgewirks in einem Beschattungssystem mit regelbarer Licht-, Luft- und/oder Dampfdurchlässigkeit. Das Beschattungsgewebe oder Beschattungsgewirk weist ein elastisches Kettgarn und ein Schussgarn auf, so dass das Beschattungsgewebe oder das Beschattungsgewirk in der Kettrichtung elastisch und in der Schussrichtung unelastisch ist, wobei sich bei Dehnung des Beschattungsgewebes oder Beschattungsgewirks in Folge einer das Beschattungsgewebe oder Beschattungsgewirk aufspannenden Kraft in der Kettrichtung Öffnungen im Beschattungsgewebe oder Beschattungsgewirk bilden, deren Größe abhängig von der Verdehnbarkeit des Beschattungsgewebes oder Beschattungsgewirks regelbar ist. Eine derartige Verwendung ist aus der DE 30 35 232 A1 bekannt.

Die EP 1 420 624 A2 beschreibt ein Beschattungsgewebe oder Beschattungsgewirk mit einem elastischen Kettgarn und einem elastischen Schussgarn, wobei sich bei Dehnung des Beschattungsgewebes oder Beschattungsgewirks in der Richtung, in der es verspannt wird, Öffnungen im Beschattungsgewebe oder Beschattungsgewirk bilden, deren Größe abhängig von der Verdehnbarkeit des Beschattungsgewebes oder Beschattungsgewirks regelbar ist, wobei die Öffnungen geschlossen sind, wenn das Beschattungsgewebe oder das Beschattungsgewirk nicht mit einer Kraft beaufschlagt ist, so dass die Durchlässigkeit des Beschattungsgewebes oder des Beschattungsgewirks über die Höhe der Kraftbeaufschlagung reguliert werden kann. Ähnliche Anordnungen beschreibt auch die EP 1 342 824 A1.

Beschattungssysteme werden nicht nur im Wohnbereich eingesetzt, sondern auch im landwirtschaftlichen Betrieb, insbesondere wenn Gewächshäuser verwendet werden, um beispielsweise Blumen oder Gemüsepflanzen heranzuziehen. Die verwendeten Beschattungstextilien bieten einen Schutz vor intensiver Sonnenstrahlung und sorgen dafür, dass sich im Gewächshaus keine übermäßige Wärme ausbildet und für die Pflanzen optimale klimatische Bedingungen herrschen.

Ein Beispiel eines Beschattungstextils ist in der DE 201 06 063 U1 angegeben. Hier handelt es sich um ein Gewebe mit Kettgarn und Schussgarn, das Bändchen mit reflektierender Oberfläche enthält, welche das einfallende Sonnenlicht reflektieren sollen. Als reflektierende Bändchen werden dabei insbesondere Aluminiumbändchen eingesetzt. Das tragende Filamentgarn wird aus Acryl hergestellt, um hierdurch eine entsprechende UV-Festigkeit zu erzielen. Eine Änderung der Abschattung erfolgt durch Verfahren des Beschattungstextils als Ganzes.

Die DE 41 34 835 C1 beschreibt einen Nierenschutzgurt aus Stretchmaterial, bei dem die Dehnung des Stretchmaterials beim Tragen zu einer Öffnung des Gewebes derart führt, dass die Umgebungsluft die Fläche des Gewebes erleichtert durchdringen kann. Aus der US 2005/0109383 A1 ist ein Sonnenschutz für Kopf und Nacken bekannt, bei dem das einfallende Sonnenlicht von einem Textilmaterial geblockt wird, welches eine geringst mögliche Lichtdurchlässigkeit aufweist. Anstelle des Textils kann auch ein Nylonnetz verwendet werden.

Oftmals besteht der Wunsch, die Beschattung variabel zu gestalten und auch für eine Belüftung zu sorgen. Dazu sind netzartige Beschattungstextilien eingesetzt worden, deren lochartige Struktur einen Luftdurchlass erlaubt. Man braucht hierbei mehrere Lagen übereinander, um den gewünschten Effekt zu erzielen.

Ausgehend von diesem Stand der Technik ist es die Aufgabe der Erfindung,
- eine Beschattung für den Dach- und Seitenwandbereich von Gewächshäusern derart zu ermöglichen, dass Beschattungsgrad und Luft- bzw. Dampfdurchlässigkeit möglichst mit einer Stofflage regelbar sind;
- eine Beschattung von Balkonen/Außenfassaden/Fensterflächen an Gebäuden aller Art, in erster Linie natürlich in den warmen Zonen der Erde, zu ermöglichen;
- eine innen liegende Beschattung von Fensterflächen in Gebäuden zu ermöglichen; und
- eine kontrollierte Beschattung von landwirtschaftlichen Außenflächen in bereits bestehenden, oder für landwirtschaftliche Nutzung in ansonsten eingeschränkt oder zur Zeit nicht nutzbaren Gegenden zu ermöglichen.

Diese Aufgabe wird durch die Verwendung eines Beschattungsgewebes oder Beschattungsgewirks nach Anspruch 1 gelöst. Vorteilhafte Ausgestaltungen sind Gegenstand der Unteransprüche.

Die Erfindung besteht in der Verwendung eines Beschattungsgewebes oder eines Beschattungsgewirks mit einem aus reflektierenden Bändchen mit Filterwirkung bestehenden Schussgarn, wobei das Schussgarn für die Filterwirkung verklebte Folien mit unterschiedlicher Farbe oder transparente Folien mit Licht filternden Additiven aufweist.

Bevorzugt werden in der Kette elastische Garne eingesetzt, die Fasern oder Filamente sein können.
Bei einer bevorzugten Ausführungsform der Erfindung umfasst das Beschattungssystem flammhemmende Garne.

Erfindungsgemäß sollen die Bändchen auch dazu dienen, eine Filterwirkung zu erzielen. Dazu können entweder verklebte Folien mit unterschiedlichen Farben verwendet werden, oder transparente Folien mit Licht filternden Additiven. Neben Folien aus Aluminium sind auch Folien aus PES (Polyester)-Komponenten einsetzbar. Indem elastische Garne als Kette eingesetzt werden, können durch Verdehnung in der Kettrichtung die Bändchen separiert werden (analog zu den Öffnungen im Stoff) und so die Durchlässigkeit für Licht, Luft etc. variiert werden.

Ein Verfahren zum Regeln der klimatischen Bedingungen in einem Raum, weist die Schritte auf:
- Bereitstellen eines Beschattungssystems für Dach- und /oder Seitenwände gemäß der vorliegenden Erfindung, welches den Raum zumindest teilweise überspannt und/oder umspannt;
- Erfassen des Wertes wenigstens eines klimatischen Parameters des Raumes und Vergleichen des erfassten Wertes mit einem Sollwert für den klimatischen Parameter; und
- Dehnen oder Entspannen des Beschattungstextils entsprechend der Differenz zwischen dem erfassten Wert und dem Sollwert.

Als klimatische Parameter sind dabei Größen wie Temperatur, Luftfeuchtigkeit, Lichtintensität, spektrale Verteilung und dergleichen denkbar.

Im Folgenden soll die Erfindung anhand der beigefügten Zeichnung näher erläutert werden. Dabei zeigt:
- Figur 1: ein Beschattungstextil, das nicht zur Erfindung gehört;
- Figur 2: ein Beschattungstextil, das nicht zur Erfindung gehört;
- Figur 3: ein Beschattungstextil, das nicht zur Erfindung gehört;
- Figur 4: ein Ausführungsbeispiel eines erfindungsgemäß verwendbaren Beschattungsgewebes oder Beschattungsgewirks;
- Figur 5: ein Beschattungstextil, das nicht zur Erfindung gehört; und
- Figuren 6a und 6b: eine schematische Darstellung eines Beschattungstextils im aufgespannten und im geschlossenen Zustand, das nicht zur Erfindung gehört.

Für die vorliegende Erfindung wird vorteilhaft ein Kettengewirk eingesetzt, das auf einer Wirkmaschine mit parallelem Schusseintrag hergestellt wird, wobei die Feinheit, also die Anzahl der Nadeln pro Zoll, von E 2 bis E 18 variiert. Solche Maschinen sind bekannt und werden üblicherweise zum Herstellen von Kettengewirken verwendet.

Als elastische Kettgarne werden Elastikfasern eingesetzt, die auf dem Markt erhältlich sind und sich durch Dimensionsstabilität, Reißfestigkeit und Rücksprungkraft auszeichnen. Dazu gehören z.B. texturierte Polyestergarne, Bicomponentengarne, nackte und ummantelte Elastane oder nackte bzw. ummantelte Silikonfäden. Die Garnstärken liegen vorzugsweise zwischen 78 dtex und 660 dtex. Als unelastische Kett- oder Schussgarne werden vorzugsweise UVbeständige Polyestergarne oder Polyacrylgarne eingesetzt, wobei die Garnstärken zwischen 1000 dtex und 3000 dtex liegen.

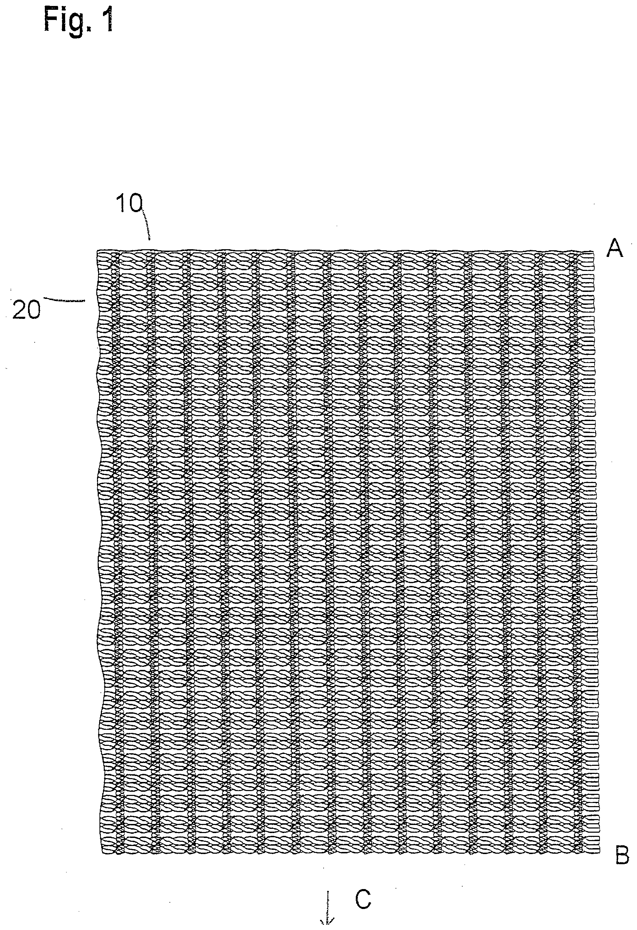

Figur 1 zeigt ein Kettengewirk mit einer Vielzahl von Kettfäden 10, die aus elastischen Fasern oder Garnen bestehen. Durch übliche Verbindungstechniken sind Schussgarne 20 eingetragen, die beispielsweise als Zwirne ausgestaltet sind und hier paarweise hintereinander liegend angeordnet sind. Die Schussgarne 20 sind praktisch nicht elastisch, so dass das Beschattungstextil in Längsrichtung, also in Richtung der Kettgarne 10 gedehnt werden kann, ohne dass es sich wesentlich in Querrichtung, also in Richtung der Schussgarne 20 zusammenzieht. In der Verwendung als Beschattungstextil kann beispielsweise das in der Zeichnungsfigur obere Ende A des Beschattungstextils festgehalten werden, während am unteren Ende B in Richtung des Pfeils C eine Kraft ausgeübt wird, welche die Kettgarne 10 dehnt. Damit werden auch die Paare der Schussgarne 20 voneinander entfernt, so dass Öffnungen entstehen, deren Größe von der Verdehnbarkeit des Stoffes abhängen. Über eine geeignete Sensorik können klimatische Parameter, wie Temperatur, Luftfeuchtigkeit und dergleichen erfasst werden, und zur Steuerung und Regelung eingesetzt werden. So kann beispielsweise bei unerwünscht hoher Luftfeuchtigkeit auf das Beschattungstextil eine Verdehnbarkeit erreicht werden, welche die Öffnungen vergrößert und so für eine verbesserte Durchlüftung sorgt. Umgekehrt kann bei starkem Sonneneinfall im Dach- und/oder Seitenwandbereich das Beschattungstextil entspannt werden, so dass praktisch eine geschlossene Stoffschicht vorliegt, die das Sonnenlicht wirkungsvoll abblockt.

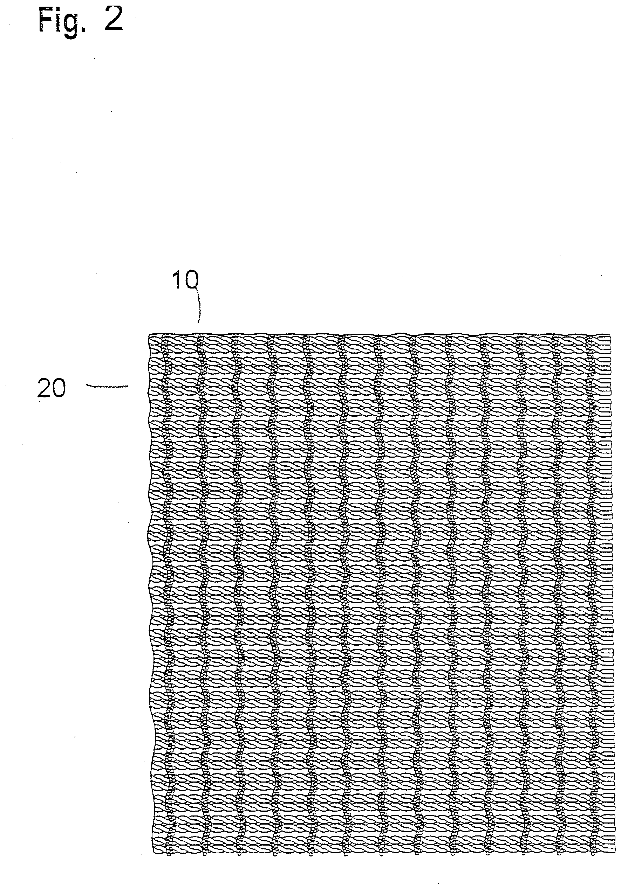

Figur 2 zeigt ein Beschattungstextil, das sich von der Ausführungsform nach Figur 1 dadurch unterscheidet, dass die Kettgarne 10 nicht geradlinig verlaufen, sondern wellig. Damit können dekorative Wirkungen in 3-D-Effekt erzielt werden, wenn dies gewünscht ist.

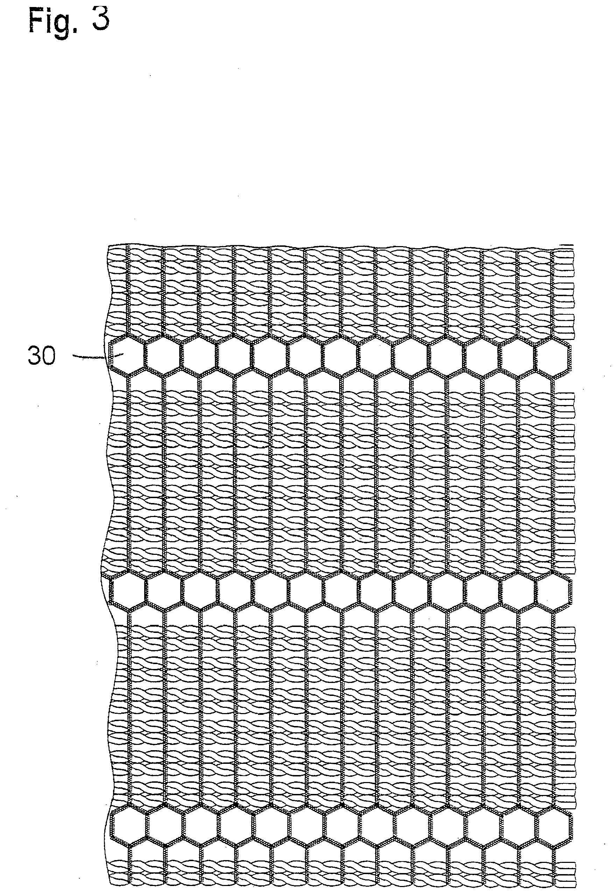

Figur 3 zeigt ein Beschattungstextil, bei dem von vornherein eine Anzahl Öffnungen 30 vorgesehen ist. Diese üben eine Funktionalität aus, dienen aber auch dekorativen Zwecken.

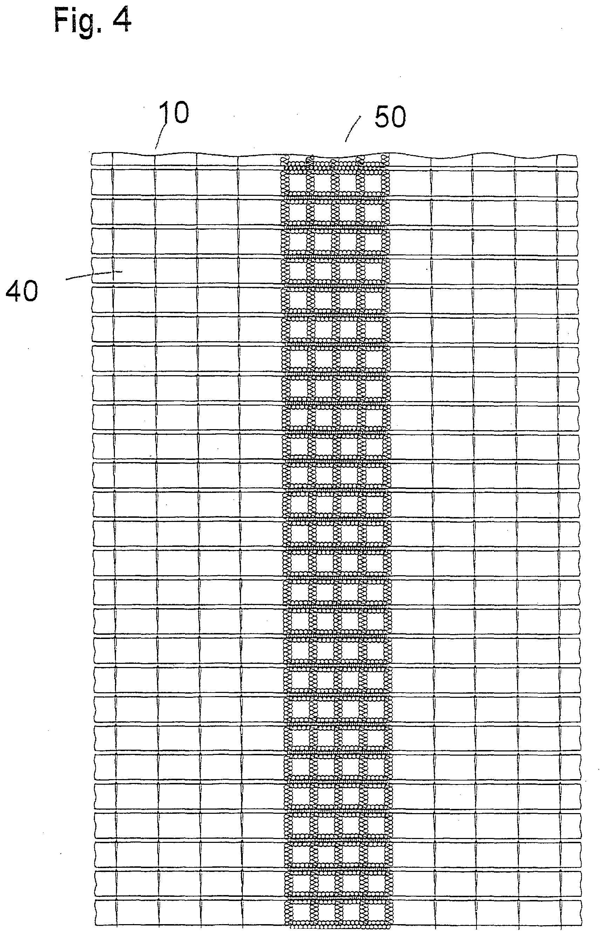

Eine Ausführungsform der Erfindung zeigt Figur 4, bei der zwischen die Kettfäden 10 reflektierende Bändchen 40 eingebracht worden sind, die beispielsweise aus Aluminiumfolie oder aus Filterfolie bestehen, so dass Sonnenlicht vollständig oder teilweise reflektiert bzw. absorbiert wird. Die mittig liegende offenporige Struktur 50 sorgt weiterhin dafür, dass eine Belüftung stattfinden kann.

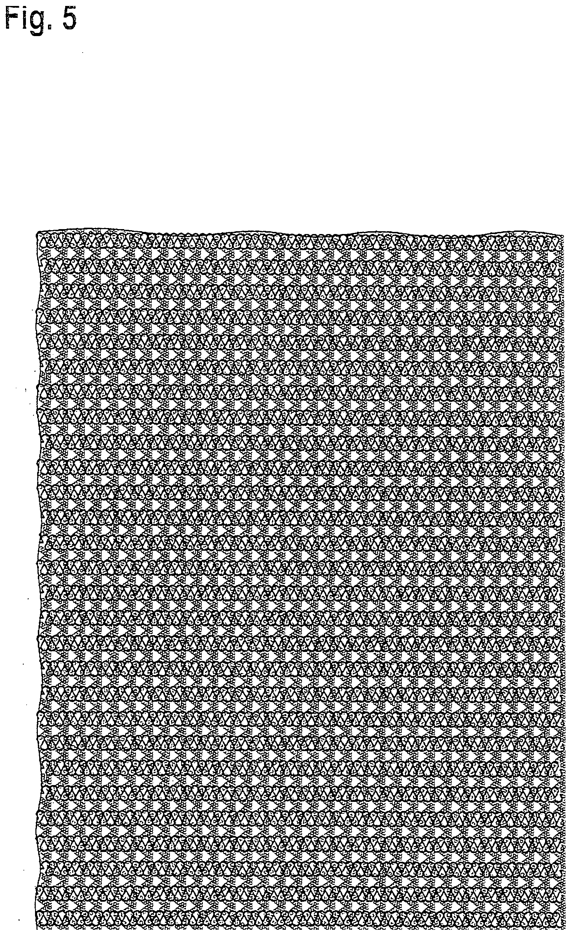

Figur 5 zeigt ein Beschattungstextil mit besonders engmaschiger Struktur, die sich durch eine hohe Stabilität auszeichnet.

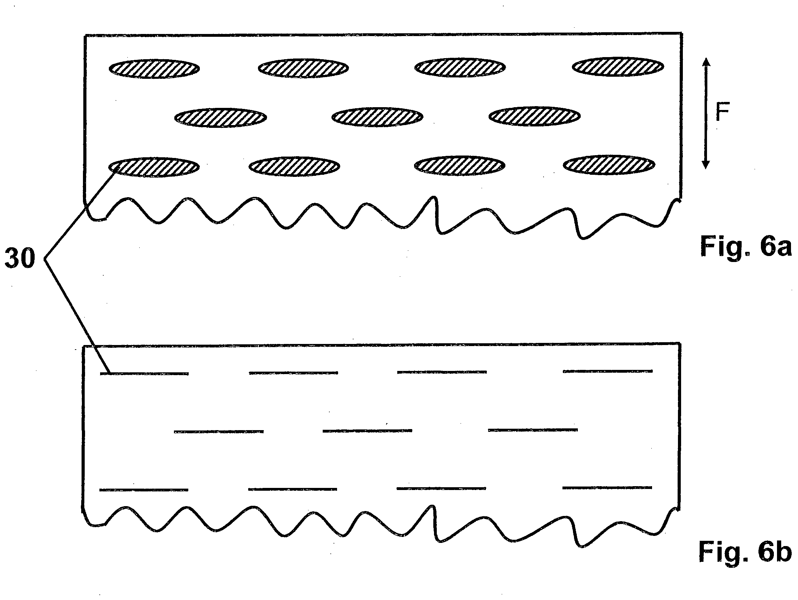

Schließlich zeigen die Figuren 6a und 6b schematisch ein Beschattungstextil im aufgespannten sowie im geschlossenen Zustand. Der mit F gekennzeichnete Doppelpfeil zeigt in Richtung der das Textil aufspannenden Kraft, in Folge der sich die als in Figur 6a als schraffierte Ellipsen dargestellten Öffnungen 30 ausbilden. Das Textil gemäß Figur 6b ist nicht mit einer Kraft beaufschlagt, so dass auch die Öffnungen 30 geschlossen sind. Es wird deutlich, dass die Durchlässigkeit eines erfindungsgemäß verwendeten Beschattungstextils über die Höhe der Kraftbeaufschlagung F reguliert werden kann.

Aufgrund ihrer Dimensionsstabilität in Querrichtung können die erfindungsgemäßen verwendbaren Beschattungsgewebe oder Beschattungsgewirke grundsätzlich ohne einen weiteren Rahmenaufbau verwendet werden. Es liegt jedoch im Umfang der Erfindung, ein Beschattungstextil in seitlichen Führungsschienen oder Führungsnuten zu führen, die in Rahmen angebracht sind, so dass durch nebeneinander Anordnen einer Vielzahl von Rahmen eine geschlossene Abdeckung eines Raumes erzielbar ist. Die Dehnung der Beschattungstextilien kann manuell erfolgen, bevorzugt ist aber das Vorsehen eines oder mehrerer Elektromotoren oder anderer elektrischer Antriebe, damit eine Regelungsmöglichkeit abhängig von klimatischen Parametern besteht.

## Patentansprüche

1. Verwendung eines Beschattungsgewebes oder eines Beschattungsgewirks mit einem elastischen Kettgarn (10) und einem aus reflektierenden Bändchen (40) mit Filterwirkung bestehenden Schussgarn (20), in einem Beschattungssystem mit regelbarer Licht-, Luft- und/oder Dampfdurchlässigkeit, so dass das Beschattungsgewebe oder das Beschattungsgewirk in der Kettrichtung elastisch und in der Schussrichtung unelastisch ist, wobei das Schussgarn (20) für die Filterwirkung verklebte Folien mit unterschiedlicher Farbe oder transparente Folien mit Licht filternden Additiven aufweist, und wobei sich bei Dehnung des Beschattungsgewebes oder Beschattungsgewirks in Folge einer das Beschattungsgewebe oder Beschattungsgewirk aufspannenden Kraft (F) in der Kettrichtung Öffnungen (30) im Beschattungsgewebe oder Beschattungsgewirk bilden, deren Größe abhängig von der Verdehnbarkeit des Beschattungsgewebes oder Beschattungsgewirks regelbar ist.

2. Verwendung nach Anspruch 1, wobei zumindest teilweise Garne (10) der Kette elastische Fasern oder Filamente sind.

3. Verwendung nach Anspruch 1, wobei das Beschattungssystem ein flammhemmendes Garn umfasst.

4. Verwendung nach Anspruch 1, wobei das verwendete Gewebe oder Gewirk eine elastische Folie oder Membrane aufweist.

## Claims

1. The use of a woven shading fabric or a knitted shading fabric with an elastic warp yarn (10) and a weft yarn (20) made of reflective strips (40) with a filtering effect, in a shading system with controllable light, air and/or vapor permeability, so that the woven shading fabric or the knitted shading fabric is elastic in the warp direction and inelastic in the weft direction, wherein for its filtering effect the weft yarn (20) has bonded films of different colors or transparent films with light-filtering additives, and wherein upon stretching of the woven sunscreen fabric or the knitted shading fabric as a result of a force (F) acting upon the woven shading fabric or knitted shading fabric in the warp direction, openings (30) form in the woven shading fabric or knitted shading fabric, the size of which can be regulated depending on the extensibility of the woven shading fabric or knitted shading fabric.

2. The use according to claim 1, wherein at least some of the warp yarns (10) are elastic fibers or filaments.

3. The use according to claim 1, wherein the shading system comprises a flame-retardant yarn.

4. The use according to claim 1, wherein the knitted or woven fabric used has an elastic foil or membrane.

## Revendications

1. Utilisation d'un tissu pare-soleil ou d'un tricot pare-soleil avec un fil de chaîne élastique (10) et un fil de trame (20) constitué de bandelettes réfléchissantes (40) avec un effet de filtrage, dans un système pare-soleil avec perméabilité à la lumière, à l'air et/ou à la vapeur réglable, de façon à ce que le tissu pare-soleil ou le tricot pare-soleil soit élastique dans le sens de la chaîne et ne soit pas élastique dans le sens de la trame, le fil de trame (20) comprenant, pour l'effet de filtrage, des feuilles collées de différentes couleurs ou des feuilles transparentes avec des additifs filtrant la lumière et, lors de la dilatation du tissu pare-soleil ou du tricot pare-soleil à la suite d'une force (F) de tension du tissu pare-soleil ou du tricot pare-soleil, des ouvertures (30) se formant, dans le sens de la chaîne, dans le tissu pare-soleil ou dans le tricot pare-soleil, dont la taille peut être ajustée en fonction de la capacité de distension du tissu pare-soleil ou du tricot pare-soleil.

2. Utilisation selon la revendication 1, les fils (10) de la chaîne étant au moins partiellement des fibres ou des filaments élastiques.

3. Utilisation selon la revendication 1, le système pare-soleil comprenant un fil ignifugé.

4. Utilisation selon la revendication 1, le tissu ou le tricot utilisé comprenant une feuille ou une membrane élastique.
